(19) Europäisches Patentamt
European Patent Office
Office européen des brevets

(11) **EP 3 498 914 B1**

(12) **EUROPÄISCHE PATENTSCHRIFT**

(45) Veröffentlichungstag und Bekanntmachung des Hinweises auf die Patenterteilung:
**15.05.2024 Patentblatt 2024/20**

(21) Anmeldenummer: **17206936.1**

(22) Anmeldetag: **13.12.2017**

(51) Internationale Patentklassifikation (IPC):
***E01C 19/48*** *(2006.01)* *B60G 17/0165* *(2006.01)*

(52) Gemeinsame Patentklassifikation (CPC):
**B60G 17/0165; E01C 19/48;** B60G 2300/09; B60G 2500/30

(54) **ANPASSUNG DER NIVELLIERZYLINDEREINSTELLUNG BEI EINEM STRASSENFERTIGER**

ADJUSTMENT OF THE LEVELLING CYLINDER IN A ROAD FINISHER

AJUSTEMENT DE RÉGLAGE DE CYLINDRE À NIVELER DANS UNE FINISSEUSE DE ROUTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.06.2019 Patentblatt 2019/25**

(60) Teilanmeldung:
**24168203.8**

(73) Patentinhaber: **Joseph Vögele AG**
**67067 Ludwigshafen (DE)**

(72) Erfinder:
• **RAMB, Horst**
**67551 Worms (DE)**
• **BUSCHMANN, Martin**
**67435 Neustadt (DE)**

(74) Vertreter: **Grünecker Patent- und Rechtsanwälte PartG mbB**
**Leopoldstraße 4**
**80802 München (DE)**

(56) Entgegenhaltungen:
**DE-A1- 19 709 131    DE-U1- 29 907 733**
**DE-U1- 29 923 118    US-A- 5 356 238**

**Beschreibung**

Die vorliegende Erfindung betrifft einen Straßenfertiger mit einem höhenverstellbaren Chassis, einer Einbaubohle und einem Nivellierzylinder zum Verstellen der Einbaubohle, sowie ein Verfahren zum Steuern des Nivellierzylinders.

Moderne Straßenfertiger sollen für eine Vielzahl von Einsatzmöglichkeiten geeignet sein und gleichzeitig stets steigende Anforderungen an Fertigungsqualität und Effizienz erfüllen. Um unterschiedliche Schichtdicken präzise fertigen zu können, sind Straßenfertiger zum Beispiel mit einem höhenverstellbaren Chassis ausgestattet, wie dies aus EP0849398B1 bekannt ist. Dies erlaubt den ungehinderten Transport der je nach gewünschter Schichtdicke benötigten Materialmenge mittels der Verteilerschnecke vor die Einbaubohle, welche das Material sodann verdichtet und glättet. Die Einbaubohle ist dabei mit Zugholmen verbunden, welche wiederum an Zugpunkten an dem Chassis angelenkt sind. Mittels Nivellierzylindern kann die Zugpunkthöhe und damit der Anstellwinkel der Einbaubohle verstellt werden. Der Anstellwinkel definiert im Einbaubetrieb, wenn die Einbaubohle schwimmend über das Material gezogen wird, die Schichtdicke, so dass mit größerem Anstellwinkel eine größere Schichtdicke erzielt wird.

Aus der DE 299 07 733 U1 ist ein weiterer Straßenfertiger bekannt, dessen Chassis vor seinen beiden Raupenlaufwerken an einem Drehpunkt schwenkbar gelagert und an seiner Hinterseite mittels Höhenverstelleinrichtungen höhenverstellbar ist. Damit sind größere Fördermengen des Einbaumaterials möglich. Dabei kann der Abstand der hinteren Querverteilerschnecke zur Einbauhöhe des Straßenbelags konstant gehalten werden.

Aus der US 5,356,238 A ist ein Straßenfertiger mit Nivellierzylinderautomatik bekannt, bei welchem die Zugpunkthöhe der Zugholme der Einbaubohle mittels Sensoren überwacht wird. Somit wird, beispielsweise beim Überfahren einer Unebenheit, eine Abweichung der aktuellen Zugpunkthöhe von einer Referenzhöhe von den Sensoren detektiert und durch eine Steuerungsvorrichtung ein Nivellierzylinder entsprechend angesteuert, um die Zugpunkthöhe zu korrigieren.

Aufgabe der Erfindung ist es, ein verbessertes Steuerungssystem für einen Straßenfertiger bereitzustellen.

Gelöst wird die Aufgabe durch einen Straßenfertiger mit den Merkmalen des Anspruchs 1 sowie einem Verfahren mit den Merkmalen des Anspruchs 7. Vorteilhafte Weiterbildungen der Erfindung sind in den Unteransprüchen angegeben.

Ein erfindungsgemäßer Straßenfertiger umfasst ein Fahrwerk, welches ein Raupen- oder Räderfahrwerk sein kann, ein relativ zum Fahrwerk höhenverstellbares Chassis, ein elektronisches Steuerungssystem und eine an Zugholmen angebrachte Einbaubohle, wobei die Zugholme jeweils an einem Zugpunkt an dem Chassis angelenkt sind und die Zugpunkte mittels je eines Nivellierzylinders relativ zum Chassis verstellbar sind.

Das Steuerungssystem umfasst eine Empfangseinheit, eine Auswerteeinheit und eine Befehlseinheit. Die Empfangseinheit ist dazu konfiguriert und verschaltet, eine aktuelle Ist-Zugpunkthöhe zu erfassen. Die Auswerteeinheit ist dazu konfiguriert, eine durch eine Höhenverstellung des Chassis relativ zum Fahrwerk hervorgerufene Abweichung der Ist-Zugpunkthöhe von einer Soll-Zugpunkthöhe zu berechnen, und die Befehlseinheit ist dazu konfiguriert, die Abweichung automatisch ganz oder zumindest teilweise zu korrigieren, indem ein von der Befehlseinheit gesendetes Korrektursignal eine Hydrauliksteuerung zu einem Verstellen mindestens eines der Nivellierzylinder veranlasst. Die Zugpunkthöhe ist dabei allgemein abhängig von einer Höhenposition des Chassis, sowie der Position des Zylinderkolbens des Nivellierzylinders.

Der Straßenfertiger weist einen Sensor zur Messung der Höhenposition H des Chassis an seinem Abwurfende auf und das Chassis ist an einem Drehpunkt D an einem vorderen Ende des Straßenfertigers mit dem Fahrwerk in fester Höhe mit Bezug zum Boden verbunden, sodass das Chassis durch Heben und Senken an seinem Abwurfende höhenverstellbar ist, wobei das Chassis um den Drehpunkt dreht. Das Steuerungssystem berechnet eine Höhenänderung dN des Zugpunktes im Wesentlichen aus einer Höhenänderung dH des Chassis an seinem Abwurfende, einem Abstand r des Zugpunktes zum Drehpunkt D und einem Abstand l des Abwurfendes zum Drehpunkt D mittels der Formel $dN = dH \cdot r/l$.

Die Höhenposition des Chassis kann variiert werden, um unterschiedliche Mengen eines Einbaumaterials, zum Beispiel bituminöses oder Beton-Material zum Fertigen von Straßenbelägen zu verarbeiten. Zwischen Chassis und Einbaubohle befindet sich eine Förderschnecke, welche das Material in ausreichender Menge und Dicke gleichmäßig vor der Einbaubohle verteilen soll. Mit dem Verstellen der Höhenposition des Chassis wird auch die daran verankerte Förderschnecke verstellt, so dass der Platz vor der Einbaubohle variabel ist und ausreichend groß eingestellt werden kann, um genügend Material zu verteilen, aber auch nicht zu groß ist, so dass ein Auskühlen des Materials verhindert wird. Die Materialmenge ist dadurch auch an unterschiedliche Fertigungsgeschwindigkeiten anpassbar. Durch die automatische Korrektur des Zugpunktes der Einbaubohle kann dabei der Anstellwinkel der Einbaubohle und damit die Einbauhöhe des Mischguts konstant gehalten werden. Dabei muss kein weiterer Eingriff zum Erhalt der Einbauhöhe vom Bediener vorgenommen werden. Im Gegensatz zu früheren Systemen, welche einen Regelbedarf der Zugpunkthöhe nur indirekt über die Messung einer falschen Schichtdicke eines bereits verlegten Straßenbelags feststellten, wird durch die vorliegende Erfindung ein Einbau des Materials mit falscher Schichtdicke bereits im Vorhinein verhindert. Wie weiter unten beschrieben, können Tabellen mit entsprechender Zuordnung von Schichtdicke und Zugpunkthöhe im Steuerungssystem hinterlegt sein.

In einer vorteilhaften Variante ist eine am Fahrwerk installierte Skala dazu konfiguriert, die Zugpunkthöhe mit Bezug zum Boden anzuzeigen. Dies kann zum Beispiel eine fest installierte Skala mit mechanischer Umsetzung an einem Raupenträger sein. Damit kann die Zugpunkthöhe von einem Bediener, welcher zusätzlich zu einem Fahrer des Straßenfertigers vorhanden sein kann und sich neben dem Fahrzeug oder an der Einbaubohle aufhält, direkt abgelesen werden. Dies unterstützt den Fahrer des Straßenfertigers, da er nicht als einzige Person alle Parameter überwachen muss, und zudem kann die zweite Person Veränderungen an der Zugpunkthöhe oder anderer Einstellungen der Einbaubohle direkt mit dem Ergebnis des Einbaus vergleichen.

Üblicherweise ist eine an einem Bedienstand des Straßenfertigers integrierte elektronische Anzeige vorhanden und dazu konfiguriert, die Zugpunkthöhe mit Bezug zum Boden anzuzeigen. Durch eine solche Anzeige kann bereits der Fahrer neben allen anderen Betriebsparametern die Zugpunkthöhe überwachen und es kann zumindest vorübergehend auf einen zweiten Bediener am Straßenfertiger verzichtet werden. Außerdem kann die Anzeige mit optischen und/oder akustischen Signalen auf das Erreichen von vorher definierten Werten, wie zum Beispiel obere oder untere Grenzen, aufmerksam machen. Eine elektronische Anzeige gibt dabei die Möglichkeit, auf bekannte Weise weitere Informationen gleichzeitig zur Verfügung zu stellen. So kann auch auf Parameterkombinationen, wie zum Beispiel Fahrgeschwindigkeit und Anstellwinkel, hingewiesen werden, welche mit Hinblick auf die Fertigungsqualität und Effizienz zu bevorzugen oder zu vermeiden sind.

In einer weiteren zweckmäßigen Ausführungsform ist die Soll-Zugpunkthöhe durch einen Bediener vorgebbar oder es ist eine Soll-Schichtdicke durch einen Bediener vorgebbar und das Steuerungssystem ist dazu konfiguriert, die Soll-Schichtdicke in die Soll-Zugpunkthöhe umzurechnen, oder es ist die Soll-Zugpunkthöhe Teil eines Satzes von Parametern eines Betriebsprogramms, welches von dem Bediener auswählbar ist. So kann der Bediener an den Eingabegeräten des Bedienstands oder auch an Bedienterminals, welche zum Beispiel an der Einbaubohle vorhanden sind, die Betriebsparameter wählen, so dass diese, wie beschrieben, automatisch von dem Steuerungssystem überwacht werden. Da die Soll-Schichtdicke eines Straßenbelages im Vorhinein bekannt ist, ist es für den Bediener besonders einfach, diese vorzugeben und von dem Steuerungssystem in die Zugpunkthöhe umrechnen zu lassen. Erfindungsgemäß ist das Chassis an einem Drehpunkt an einem vorderen Ende des Straßenfertigers mit dem Fahrwerk in fester Höhe mit Bezug zum Boden verbunden. Dabei ist das Chassis durch Heben und Senken an seinem Abwurfende, d.h. seinem hinteren Ende, höhenverstellbar, wobei sich das Chassis um den Drehpunkt dreht. Die Höhenverstellung des Chassis dient insbesondere dazu, den Platz direkt vor der Einbaubohle zu variieren, wodurch die Menge des Einbaumaterials, welches gleichzeitig von der Förderschnecke vor der Einbaubohle verteilt und damit verarbeitet werden kann, ebenfalls variabel ist. Deshalb ist es ausreichend, das Chassis an seinem Abwurfende in seiner Höhe zu verstellen. Am vorderen Ende des Straßenfertigers kann daher auf einen Hubmechanismus verzichtet werden, was den Herstellungs- und Wartungsaufwand und damit verbundene Kosten reduziert.

Ein Sensor zum Erkennen der Zugpunkthöhe kann an oder benachbart zu dem Nivellierzylinder vorhanden sein. Der Sensor kann ein mechanischer Sensor, wie zum Beispiel ein Pendel- oder Skitaster, oder ein elektronischer Sensor, wie zum Beispiel ein Ultraschall- oder Lasersensor sein. Ein solcher Sensor liefert exakte Messwerte und kann elektronisch einfach ausgelesen werden. Ist der Sensor direkt an dem Zugpunkt der Einbaubohle angebracht, so kann er direkt die Ist-Zugpunkthöhe messen. Alternativ kann der Sensor auch an dem Chassis montiert sein und dessen Höhenposition am Nivellierzylinder messen und mit einer Position eines Zylinderkolbens kombinieren, um die Zugpunkthöhe zu ermitteln. Dazu wäre ein weiterer Sensor, welcher den Fahrweg des Zylinderkolbens misst, nötig. Eine Kombination der Position des Zylinderkolbens und der Höhenposition des Chassis im Bereich des Nivellierzylinders kann auch zentral von der Auswerteeinheit des elektronischen Steuerungssystems erfolgen.

Vorzugsweise umfasst das Steuerungssystem eine Speichereinheit, welche dazu geeignet ist, von einem Bediener eingegebene Parameter, sowie während des Betriebs ermittelte Parameter, insbesondere die Zugpunkthöhe, zu speichern. Somit können die während des Betriebs gemessenen Werte mit vorhandenen Vorgaben im Sinne eines Rückkopplungsmechanismus verglichen werden, und das Steuerungssystem kann bei Abweichungen mechanisch nachregeln. Auch kann die Speichereinheit Sätze von Parametern speichern, welche einem bestimmten Betriebsprogramm zugeordnet sind. Ein solches Betriebsprogramm kann dann vom Bediener ausgewählt werden. Dadurch kann das Steuerungssystem, wie beschrieben, die automatische Regelung des Nivellierzylinders auch im laufenden Betrieb bewerkstelligen. Es können zudem Parameterkombinationen, zum Beispiel Geschwindigkeit und Bohlenanstellwinkel, welche sich als vorteilhaft erwiesen haben, gespeichert und erneut verwendet werden. Außerdem können Sätze oder Tabellen von sich entsprechenden Parametern, wie zum Beispiel Zugpunkthöhe und Schichtdicke, gespeichert werden und dem Bediener zur Auswahl auf einer elektronischen Anzeige dargestellt werden.

Der beschriebene erfindungsgemäße Straßenfertiger ist dazu konfiguriert und geeignet, ein Verfahren zum automatischen Steuern einer Zugpunkthöhe eines Nivellierzylinders, wie im Folgenden beschrieben, durchzuführen. Im Hinblick auf das Verfahren beschriebene Merkmale können entsprechend auf den Straßenfertiger übertragen werden und umgekehrt. Ein erfindungsgemäßes Verfahren zum automatischen Steuern einer Zugpunkthöhe eines Nivellierzylinders eines Straßenfertigers, wobei der Straßenfertiger ein elektronisches Steuerungssystem und ein relativ zu einem Fahrwerk höhenverstellbares Chassis umfasst, wobei das Chassis an einem Drehpunkt D an einem vorderen Ende des Straßenfertigers mit dem Fahrwerk in fester Höhe mit Bezug zum Boden verbunden ist, und das Chassis durch Heben und Senken an seinem Abwurfende höhenverstellbar ist und wobei an dem Chassis und dem Nivellierzylinder ein Zugholm angelenkt ist, umfasst folgende Verfahrensschritte:

- Verstellen der Höhe des Chassis relativ zum Fahrwerk,
- Feststellen einer aktuellen Ist-Zugpunkthöhe,
- Berechnen einer von der Höhenverstellung hervorgerufenen Abweichung der Ist-Zugpunkthöhe von einer Soll-Zugpunkthöhe,
- Senden eines Korrektursignals an eine Hydrauliksteuerung, um den Nivellierzylinder zu verstellen und damit die Abweichung ganz oder zumindest teilweise zu korrigieren. Üblicherweise findet dieses Verfahren vor dem Beginn des Einbaubetriebs statt. Das Feststellen der aktuellen Ist-Zugpunkthöhe und ggf. die anschließenden Verfahrensschritte können jedoch auch während des Betriebs zur Kontrolle durchgeführt werden. Ebenso findet das Verfahren Anwendung, falls sich die Anforderungen an den Einbau, insbesondere die vorgesehene Schichtdicke, ändern. Wie bereits erwähnt, ist das Verfahren automatisiert und erfordert kein Eingreifen durch den Bediener.

Erfindungsgemäß berechnet das Steuerungssystem die Zugpunkthöhe anhand einer Höhenposition des Chassis. Das Steuerungssystem berechnet eine Höhenänderung dN eines Zugpunktes im Wesentlichen aus einer Höhenänderung dH des Chassis an seinem Abwurfende, einem Abstand r des Zugpunktes zu dem Drehpunkt D und einem Abstand I des Abwurfendes zum Drehpunkt D mittels der Formel $dN = dH*r/l$.

Wie in der Figurenbeschreibung weiter unten erläutert, wird die Höhenposition als einziger Parameter an dem Abwurfende des Chassis gemessen. Mit den bekannten geometrischen Verhältnissen kann so die Zugpunkthöhe bestimmt werden. Dies ist eine besonders einfache Möglichkeit und es wird lediglich ein Sensor zur Messung der Höhenposition am Abwurfende (hinteren Ende) des Chassis benötigt.

Im Folgenden werden Ausführungsbeispiele der Erfindung anhand der Figuren näher beschrieben. Dabei zeigen

Figur 1:  eine Seitenansicht eines Straßenfertigers mit einem höhenverstellbaren Chassis und einem Nivellierzylinder,
Figur 2:  eine Seitenansicht des Straßenfertigers mit dem höhenverstellbaren Chassis in einer unteren Grundposition sowie in einer oberen erhöhten Position,
Figur 3:  eine schematische Ansicht eines elektronischen Steuerungssystems mit dessen zugehörigen Komponenten, und
Figur 4:  eine schematische Ansicht eines Verfahrens zum automatischen Steuern einer Zugpunkthöhe des Nivellierzylinders.

Einander entsprechende Komponenten sind in den Figuren jeweils mit gleichen Bezugszeichen versehen.

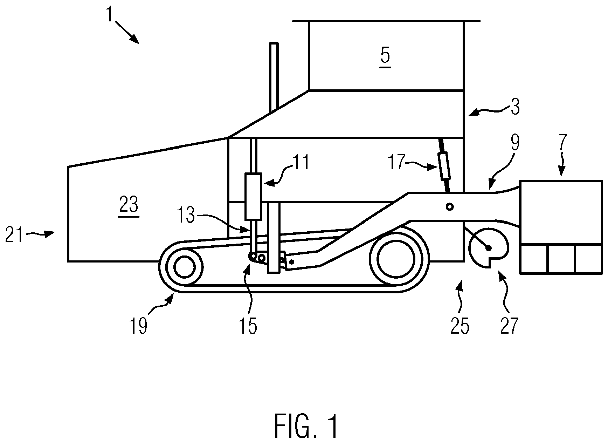

Figur 1 zeigt ein Ausführungsbeispiel eines erfindungsgemäßen Straßenfertigers 1 in einer Seitenansicht. Der Straßenfertiger 1 umfasst ein relativ zu einem Fahrwerk 19 höhenverstellbares Chassis 3, welches hier in einer unteren Grundposition gezeigt ist und einen Bedienstand 5 aufweist. Desweitern umfasst der Straßenfertiger 1 eine Einbaubohle 7, welche austauschbar oder seitlich ausziehbar sein kann. Die Einbaubohle 7 ist mit einem Zugholm 9 verbunden, welcher, gegebenenfalls über ein oder mehrere Scharniere, an einem Nivellierzylinder 11, bzw. dessen Kolbenstange 13 angelenkt ist. Ein Zugpunkt 15 definiert die gelenkartige Verbindung des Nivellierzylinders 11 mit dem Zugholm 9. Zum Anheben der Einbaubohle 7 bei Betriebsunterbrechungen kann ein Hubkolben 17 vorhanden sein. Während des Betriebs ist der Hubkolben 17 unbelastet, so dass die Einbaubohle 7 auf dem Einbaumaterial aufschwimmt. Üblicherweise ist die Einbaubohle 7 jeweils mit einem Zugholm 9 an der rechten und linken Seite des Straßenfertigers 1 angelenkt. Das höhenverstellbare Chassis 3 ist auf einem Fahrwerk 19 angebracht, welches hier als Raupenfahrwerk dargestellt ist, aber auch ein Räderfahrwerk sein kann. Der Straßenfertiger 1 weist an seinem vorderen Ende 21 einen Schüttgutbunker 23 auf, in welchem ein Vorrat an Einbaumaterial aufbewahrt wird und aus welchem es mittels eines Förderbands durch einen Tunnel (nicht gezeigt) zum Abwurfende (hinteren Ende) 25 des Straßenfertigers 1 transportiert wird, wo es von einer Förderschnecke 27 gleichmäßig vor der gesamten Breite der Einbaubohle 7 verteilt wird.

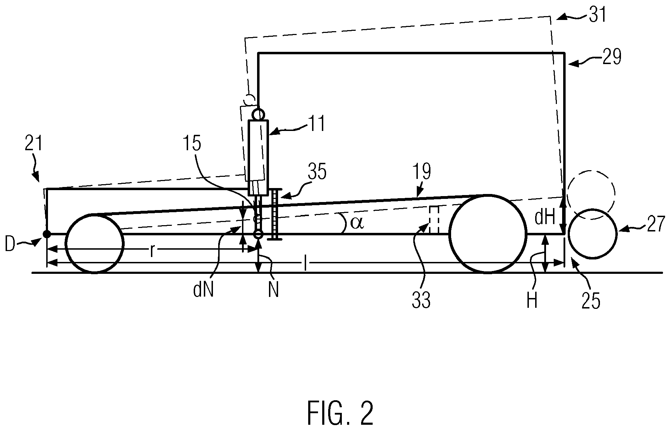

Figur 2 zeigt eine Seitenansicht des Straßenfertigers 1 mit dem höhenverstellbaren Chassis 3 in einer unteren Grundposition 29 sowie (in gestrichelten Linien) in einer oberen erhöhten Position 31. Die Anhebung des Chassis 3 gegenüber dem Fahrwerk 19 erfolgt mittels eines Hubmechanismus 33, welcher zum Beispiel hydraulisch sein kann, wobei das Chassis 3 an seinem vorderen Ende 21 in konstanter Höhe mit dem Fahrwerk 19 verbunden bleibt und um den Drehpunkt D dreht. Somit bewegen sich sowohl das hintere Ende 25 des Chassis 3 als auch der Zugpunkt 15 jeweils im Wesentlichen auf einer Kreisbahn um den Drehpunkt D. Durch das Anheben des Chassis 3 wird ebenfalls die Förderschnecke 27 angehoben, wodurch sich der Platz vor der Einbaubohle 7 vergrößert und mehr Material verbaut werden kann.

Wie oben beschrieben, kann die Änderung der Zugpunkthöhe dN durch einen Sensor ermittelt werden. Erfindungsgemäß wird sie aus der Änderung der Höhenposition des Chassis dH, hergeleitet:

Es sei die Höhenposition H des Chassis 3, bzw. die Änderung der Höhenposition dH des Chassis 3, gemessen an dessen Abwurfende 25, sowie ein Abstand I des Abwurfendes 25 vom Drehpunkt D und ein Abstand r des Zugpunktes 15 vom Drehpunkt D bekannt, sowie alpha der Winkel, welchen das angehobene Chassis 3 mit der Horizontalen einschließt, so ergibt sich mit

$$\sin(alpha) = dH / I = dN / r$$

die Änderung der Zugpunkthöhe dN = dH * r / I .

Eine am Fahrwerk 19 installierte mechanische Skala 35 kann die Änderung der Zugpunkthöhe dN, bzw. die absolute Zugpunkthöhe N mit Bezug zum Boden anzeigen.

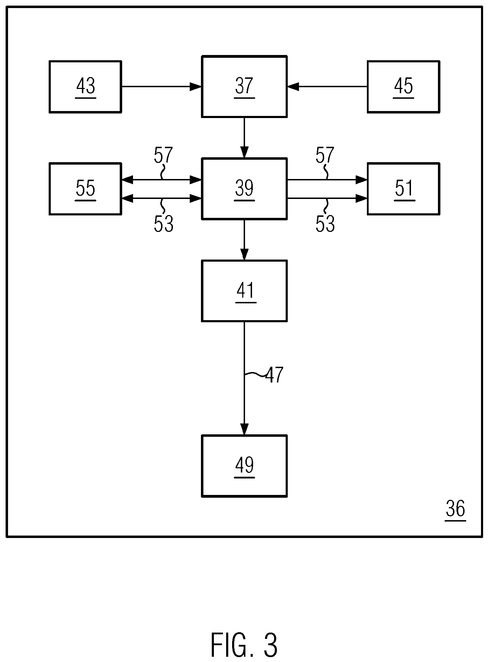

Figur 3 zeigt eine schematische Ansicht eines elektronischen Steuerungssystems 36 des Straßenfertigers 1 mit dessen zugehörigen Komponenten. Eine Empfangseinheit 37 kann eine aktuelle Ist-Zugpunkthöhe N, geliefert von einem ersten Sensor 43, sowie die Höhenposition H des Chassis 3, geliefert von einem zweiten Sensor 45, empfangen und an eine Auswerteeinheit 39 weiterleiten, welche eine Abweichung der Ist-Zugpunkthöhe N von einer Soll-Zugpunkthöhe entweder aus der gelieferten Ist-Zugpunkthöhe N oder erfindungsgemäß aus der Höhenposition H des Chassis 3 gemäß Figur 2 berechnet. Die Befehlseinheit 41 kann dann ein entsprechendes Korrektursignal 47 an eine Hydrauliksteuerung 49 senden. Eine elektronische Anzeige 51 kann am Bedienstand 5 die gemessenen und berechneten Parameter 53 anzeigen, und eine Speichereinheit 55 kann mit diesen beschrieben werden und sie können von der Speichereinheit 55 wieder ausgelesen werden. Die Speichereinheit 55 dient ebenfalls zum Speichern von Parametersätzen, die bestimmten Betriebsprogrammen 57 zugeordnet sind und vom Bediener ausgewählt werden können.

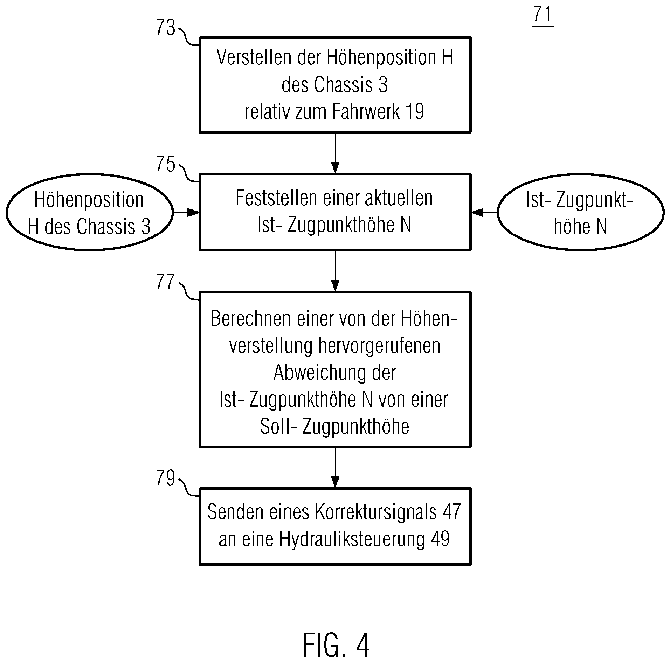

Figur 4 zeigt eine schematische Ansicht des Verfahrens 71 zum automatischen Steuern einer Zugpunkthöhe N des Nivellierzylinders 11. Wie bereits oben erläutert, umfasst das Verfahren 71 vier Verfahrensschritte 73, 75, 77, 79:

73 - Verstellen der Höhenposition H des Chassis 3 relativ zum Fahrwerk 19,
75 - Feststellen einer aktuellen Ist-Zugpunkthöhe N,
77 - Berechnen einer von der Höhenverstellung hervorgerufenen Abweichung der Ist-Zugpunkthöhe N von einer Soll-Zugpunkthöhe,
79 - Senden eines Korrektursignals 47 an eine Hydrauliksteuerung 49, um den Nivellierzylinder 11 zu verstellen und damit die Abweichung ganz oder zumindest teilweise zu korrigieren.

Eingangswerte für das Verfahren 71 sind die Ist-Zugpunkthöhe N sowie die Höhenposition H des Chassis 3.

Ausgehend von den beschriebenen Ausführungsformen für einen Straßenfertiger 1 mit automatischer Anpassung der Nivellierzylindereinstellung sind vielerlei Variationen desselben denkbar. So kann das elektronische Steuerungssystem 36 dezentral mit voneinander getrennten Einheiten (Empfangs-, Auswerte- und Befehlseinheit) ausgebildet sein, aber auch in Form einer herkömmlichen Datenverarbeitungsstruktur mit einer zentralen Prozessoreinheit.

**Patentansprüche**

1. Straßenfertiger (1) mit einem Fahrwerk (19), einem relativ zum Fahrwerk (19) höhenverstellbaren Chassis (3), einem elektronischen Steuerungssystem (36) und einer an Zugholmen (9) angebrachten Einbaubohle (7), wobei die Zugholme (9) jeweils an einem Zugpunkt (15) an dem Chassis (3) angelenkt sind und die Zugpunkte (15) mittels je eines Nivellierzylinders (11) relativ zum Chassis (3) verstellbar sind, und das Steuerungssystem (36) eine Empfangseinheit (37), eine Auswerteeinheit (39) und eine Befehlseinheit (41) umfasst, wobei die Empfangseinheit (37) dazu konfiguriert ist, eine aktuelle Ist-Zugpunkthöhe (N) zu erfassen und die Auswerteeinheit (39) dazu konfiguriert ist, eine durch eine Höhenverstellung des Chassis (3) relativ zum Fahrwerk (19) hervorgerufene Abweichung der Ist-Zugpunkthöhe (N) von einer Soll-Zugpunkthöhe zu berechnen und die Befehlseinheit (41) dazu konfiguriert ist, die Abweichung automatisch zumindest teilweise zu korrigieren, indem ein von der Befehlseinheit (41) gesendetes Korrektursignal (47) eine Hydrauliksteuerung (49) zu einem Verstellen mindestens eines der Nivellierzylinder (11) veranlasst, **dadurch gekennzeichnet, dass**

- der Straßenfertiger (1) einen Sensor (45) zur Messung der Höhenposition (H) des Chassis (3) an seinem Abwurfende (25) aufweist,
- das Chassis (3) an einem Drehpunkt (D) an einem vorderen Ende (21) des Straßenfertigers (1) mit dem Fahrwerk (19) in fester Höhe mit Bezug zum Boden verbunden ist, sodass das Chassis (3) durch Heben und Senken an seinem Abwurfende (25) höhenverstellbar ist, wobei das Chassis (3) um den Drehpunkt (D) dreht, - und das Steuerungssystem (36) dazu konfiguriert ist die Ist-Zugpunkthöhe (N) anhand einer Höhenposition (H) des Chassis zu berechnen und dazu konfiguriert ist eine Höhenänderung (dN) des Zugpunktes im Wesentlichen aus einer Höhenänderung (dH) des Chassis (3) an seinem Abwurfende (25), einem Abstand (r) des Zugpunktes (15) zum Drehpunkt (D) und einem Abstand (I) des Abwurfendes (25) zum Drehpunkt (D) mittels der Formel

$$dN = dH * r / I$$

zu berechnen.

2. Straßenfertiger nach Anspruch 1, **dadurch gekennzeichnet, dass** eine am Fahrwerk (19) installierte Skala (35) dazu konfiguriert ist, die Zugpunkthöhe (N) mit Bezug zum Boden anzuzeigen.

3. Straßenfertiger nach einem der vorangegangenen Ansprüche, **dadurch gekennzeichnet, dass** eine an einem Bedienstand (5) des Straßenfertigers (1) integrierte elektronische Anzeige (51) dazu konfiguriert ist, die Zugpunkthöhe (N) mit Bezug zum Boden anzuzeigen.

4. Straßenfertiger nach einem der vorangegangenen Ansprüche, **dadurch gekennzeichnet, dass** die Soll-Zugpunkthöhe durch einen Bediener vorgebbar ist oder eine Soll-Schichtdicke durch einen Bediener vorgebbar ist und das Steuerungssystem (36) dazu konfiguriert ist, die Soll-Schichtdicke in die Soll-Zugpunkthöhe umzurechnen, oder die Soll-Zugpunkthöhe Teil eines Satzes von Parametern (53) eines Betriebsprogramms (57) ist, welches von dem Bediener auswählbar ist.

5. Straßenfertiger nach einem der vorangegangenen Ansprüche, **dadurch gekennzeichnet, dass** ein Sensor (43) zum Erkennen der Zugpunkthöhe (N) vorhanden ist, vorzugsweise an oder benachbart zu dem Nivellierzylinder (11).

6. Straßenfertiger nach einem der vorangegangenen Ansprüche, **dadurch gekennzeichnet, dass** das Steuerungssystem (36) eine Speichereinheit (55) umfasst, welche dazu geeignet ist, von einem Bediener eingegebene Parameter (53), sowie während des Betriebs ermittelte Parameter (53), insbesondere die Zugpunkthöhe (N), zu speichern.

7. Verfahren (71) zum automatischen Steuern einer Zugpunkthöhe (N) eines Nivellierzylinders (11) eines Straßenfertigers (1), wobei der Straßenfertiger (1) ein elektronisches Steuerungssystem (36) und ein relativ zu einem Fahrwerk (19) höhenverstellbares Chassis (3) umfasst, wobei das Chassis an einem Drehpunkt (D) an einem vorderen Ende des Straßenfertigers mit dem Fahrwerk in fester Höhe mit Bezug zum Boden verbunden ist, und das Chassis durch Heben und Senken an seinem Abwurfende höhenverstellbar ist und wobei an dem Chassis (3) und dem Nivellierzylinder (11) ein Zugholm (9) angelenkt ist wobei das Verfahren (71) folgende Verfahrensschritte umfasst:

(73) - Verstellen der Höhenposition (H) des Chassis (3) relativ zum Fahrwerk (19),
(75) - Feststellen einer aktuellen Ist-Zugpunkthöhe (N),
(77) - Berechnen einer von der Höhenverstellung hervorgerufenen Abweichung der Ist-Zugpunkthöhe (N) von einer Soll-Zugpunkthöhe,
(79) - Senden eines Korrektursignals (47) an eine Hydrauliksteuerung (49), um den Nivellierzylinder (11) zu verstellen und damit die Abweichung zumindest teilweise zu korrigieren,
wobei das Steuerungssystem (36) die Ist-Zugpunkthöhe (N) anhand einer Höhenposition (H) des Chassis (3) berechnet, und das Steuerungssystem (36) eine Höhenänderung (dN) eines Zugpunktes (15) im Wesentlichen aus einer Höhenänderung (dH) des Chassis (3) an seinem Abwurfende (25), einem Abstand (r) des Zugpunktes (15) zu dem Drehpunkt (D) und einem Abstand (I) des Abwurfendes (25) zum Drehpunkt (D) mittels der Formel

$$dN = dH * r / I$$

berechnet.

**Claims**

1. Road finisher (1) comprising an undercarriage (19), a chassis (3) adjustable in height relative to the undercarriage (19), an electronic control system (36) and a paving screed (7) attached to tie bars (9), the tie bars (9) each being hinged to the chassis (3) at a pull point (15) and the pull points (15) being adjustable relative to the chassis (3) by means of a leveling cylinder (11) in each case, and the control system (36) comprises a receiving unit (37), an evaluation unit (39) and a command unit (41), the receiving unit (37) being configured to detect a current actual pull point height (N) and the evaluation unit (39) being configured to calculate a deviation of the actual pull point height (N) from a target pull point height caused by a height adjustment of the chassis (3) relative to the undercarriage (19) and the command unit (41) being configured thereto, automatically at least partially correcting the deviation by causing a correction signal (47) sent by the command unit (41) to cause a hydraulic controller (49) to adjust at least one of the leveling cylinders (11), **characterized in that**

   - the road finisher (1) comprises a sensor (45) for measuring a height position (H) of the chassis (3) at its discharge end (25),
   - the chassis (3) being connected at a pivot point (D) at a front end (21) of the road finisher (1) to the undercarriage (19) at a fixed height with respect to the ground, such that the chassis (3) is height-adjustable by lifting and lowering at its discharge end (25), wherein the chassis (3) rotates about the pivot point (D),
   - and the control system (36) being configured to calculate the actual pull point height (N) on the basis of a height position (H) of the chassis (3) and being configured to calculate a change in height (dN) of the pull point essentially from a change in height (dH) of the chassis (3) at its discharge end (25), a distance (r) of the pull point (15) from the pivot point (D) and a distance (l) of the discharge end (25) from the pivot point (D) by means of the formula dN = dH * r/l.

2. Road finisher according to claim 1, **characterized in that** a scale (35) installed on the undercarriage (19) is configured to indicate the pull point height (N) with respect to the ground.

3. Road finisher according to one of the preceding claims, **characterized in that** an electronic display (51) integrated on a control stand (5) of the road finisher (1) is configured to display the pull point height (N) with respect to the ground.

4. Road finisher according to one of the preceding claims, **characterized in that** the target pull point height can be preset by an operator or a target layer thickness can be preset by an operator, and the control system (36) is configured to convert the target layer thickness into the target pull point height, or the target pull point height is part of a set of parameters (53) of an operating program (57) selectable by the operator.

5. Road finisher according to one of the preceding claims, **characterized in that** a sensor (43) for detecting the pull point height (N) exists, preferably at or adjacent to the leveling cylinder (11).

6. Road finisher according to one of the preceding claims, **characterized in that** the control system (36) comprises a memory unit (55) suitable for storing parameters (53) entered by an operator and parameters (53) determined during operation, in particular the pull point height (N).

7. Method (71) for automatically controlling a pull point height (N) of a leveling cylinder (11) of a road finisher (1), the road finisher (1) comprising an electronic control system (36) and a chassis (3) which is adjustable in height relative to an undercarriage (19), the chassis (3) being connected at a pivot point (D) at a front end (21) of the road finisher (1) to the undercarriage (19) at a fixed height with respect to the ground, and the chassis (3) being height-adjustable by lifting and lowering at its discharge end (25), and a tie bar (9) being hinged on the chassis (3) and the leveling cylinder (11), the method comprising the following method steps:

   (73) - adjusting the height position (H) of the chassis (3) relative to the undercarriage (19), (75) - determining of a current actual pull point height (N),
   (77) - calculating a deviation of the actual pull point height (N) from a target pull point height caused by the height adjustment,
   (79) - transmitting a correction signal (47) to a hydraulic controller (49) to adjust the leveling cylinder (11) and thereby at least partially correct the deviation,
   wherein the control system (36) calculates the actual pull point height (N) on the basis of a height position (H) of the chassis (3), and
   the control system (36) calculates a change in height (dN) of a pull point (15) essentially from a change in height (dH) of the chassis (3) at its discharge end (25), a distance (r) of the pull point (15) from the pivot point (D) and a distance (I) of the discharge end (25) from the pivot point (D) by means of the formula dN = dH * r / I.

**Revendications**

1. Finisseur routier (1) avec un mécanisme de déplacement (19), un châssis (3) réglable en hauteur par rapport au mécanisme de déplacement (19), un système de commande électronique (36) et une table de réglage (7) montée sur des timons (9), dans lequel les timons (9) sont respectivement articulés au niveau d'un point de traction (15) sur le châssis (3) et les points de traction (15) sont réglables au moyen d'un cylindre de nivellement (11) par rapport au châssis (3), et le système de commande (36) comprend une unité de réception (37), une unité d'évaluation (39) et une unité d'instruction (41), dans lequel l'unité de réception (37) est configurée pour détecter une hauteur de point de traction réelle actuelle (N) et l'unité d'évaluation (39) est configurée pour calculer un écart de la hauteur de point de traction réelle (N) par rapport à une hauteur de point de traction de consigne provoquée par un réglage en hauteur du châssis (3) par rapport au mécanisme de déplacement (19), et l'unité d'instruction (41) est configurée pour corriger automatiquement au moins partiellement l'écart par l'action d'un signal de correction (47) envoyé par l'unité d'instruction (41) pour régler une commande hydraulique (47) d'au moins un cylindre de nivellement (11), **caractérisé en ce que**

   - le finisseur (1) présente un capteur (45) pour mesurer la position en hauteur (H) du châssis (3) à son extrémité d'éjection (25),
   - le châssis (3) est relié au mécanisme de déplacement (19) à une hauteur fixe par rapport au sol au niveau d'un point de pivotement (D) à une extrémité avant (21) du finisseur (1), de sorte que le châssis (3) est réglable en hauteur par levage et abaissement à son extrémité d'éjection (25), dans lequel le châssis (3) tourne autour du point de pivotement (D),
   - et le système de commande (36) est configuré pour calculer la hauteur de point de traction réelle (N) à l'aide d'une position en hauteur (H) du châssis, et est configuré dans ce but pour calculer un changement de hauteur (dN) du point de traction essentiellement à partir d'un changement de hauteur (dH) du châssis (3) à son extrémité d'éjection (25), d'une distance (r) du point de traction (15) au point de pivotement (D) et d'une distance (I) de l'extrémité d'éjection (25) au point de rotation (D) à l'aide de la formule

$$dN=dH*r/I.$$

2. Finisseur routier selon la revendication 1, **caractérisé en ce qu'**une échelle (35) installée sur le mécanisme de déplacement (19) est configurée pour afficher la hauteur du point de traction (N) par rapport au sol.

3. Finisseur routier selon l'une quelconque des revendications précédentes, **caractérisé en ce qu'**un affichage électronique (51) intégré à un poste de commande (5) du finisseur routier (1) est configuré pour afficher la hauteur du point de traction (N) par rapport au sol.

4. Finisseur routier selon l'une quelconque des revendications précédentes, **caractérisé en ce que** la hauteur de point de traction de consigne peut être prédéfinie par un utilisateur ou une épaisseur de couche de consigne peut être prédéfinie par un utilisateur et le système de commande (36) est configuré pour convertir l'épaisseur de couche de consigne en hauteur de point de traction de consigne, ou la hauteur de point de traction de consigne fait partie d'un ensemble de paramètres (53) d'un programme d'exploitation (57) qui peut être sélectionné par l'utilisateur.

5. Finisseur routier selon l'une quelconque des revendications précédentes, **caractérisé en ce qu'**un capteur (43) est prévu pour détecter la hauteur de point de traction (N), de préférence sur ou au voisinage du cylindre de nivellement (11).

6. Finisseur routier selon l'une quelconque des revendications précédentes, **caractérisé en ce que** le système de commande (36) comprend une unité de stockage (55) qui est adaptée pour stocker des paramètres (53) entrés par un utilisateur, ainsi que des paramètres (53) déterminés pendant l'exploitation, en particulier la hauteur de point de traction (N).

7. Procédé (71) de commande automatique d'une hauteur de point de traction (N) d'un cylindre de nivellement (11) d'un finisseur routier (1), dans lequel le finisseur routier (1) comprend un système de commande électronique (36) et un châssis (3) réglable en hauteur par rapport à un mécanisme de déplacement (19), dans lequel le châssis est relié au mécanisme de déplacement à une hauteur fixe par rapport au sol au niveau d'un point de pivotement (D) à une extrémité avant du finisseur routier, et dans lequel le châssis est réglable en hauteur par levage et abaissement au niveau de son extrémité d'éjection, et dans lequel un timon (9) est articulé au niveau du châssis (3) et au niveau du cylindre de nivellement (11), dans lequel le procédé (71) comprend les étapes de procédé suivantes consistant à :

(73) - régler la position en hauteur (H) du châssis (3) par rapport au mécanisme de déplacement (19),

(75) - déterminer une hauteur de point de traction réelle actuelle (N),

(77) - calculer un écart de la hauteur de point de traction réelle (N) par rapport à une hauteur de point de traction cible provoqué par le réglage en hauteur,

(79) - envoyer un signal de correction (47) à une commande hydraulique (49) pour régler le cylindre de nivellement (11) et ainsi corriger au moins partiellement l'écart, dans lequel le système de commande (36) calcule la hauteur de point de traction réelle (N) à partir d'une position en hauteur (H) du châssis (3), et le système de commande (36) calcule un changement de hauteur (dN) d'un point de traction (15) essentiellement à partir d'un changement de hauteur (dH) du châssis (3) au niveau de son extrémité d'éjection (25), d'une distance (r) du point de traction (15) au point de rotation (D) et d'une distance (l) de l'extrémité d'évacuation (25) au point de rotation (D) à l'aide de la formule

$$dN=dH*r/l.$$

FIG. 1

FIG. 2

FIG. 3

_71_

73 — Verstellen der Höhenposition H
des Chassis 3
relativ zum Fahrwerk 19

Höhenposition
H des Chassis 3

75 — Feststellen einer aktuellen
Ist- Zugpunkthöhe N

Ist- Zugpunkthöhe N

77 — Berechnen einer von der Höhenverstellung hervorgerufenen
Abweichung der
Ist- Zugpunkthöhe N von einer
Soll- Zugpunkthöhe

79 — Senden eines Korrektursignals 47
an eine Hydrauliksteuerung 49

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0849398 B1
- DE 29907733 U1
- US 5356238 A